# EUROPÄISCHE PATENTSCHRIFT

(11) **EP 0 628 335 B1**
(45) Veröffentlichungstag und Bekanntmachung des Hinweises auf die Patenterteilung: **08.09.1999**
(21) Anmeldenummer: 94107057.5
(22) Anmeldetag: 05.05.1994
(51) Int. Cl.: B01D 47/10

(54) **Verfahren zur Herstellung einer Venturibaueinheit für einen Venturiwäscher; Venturibaueinheit und Venturiwäscher**
Process for constructing a venturi-unit for a venturi scrubber; venturi-unit and venturi scrubber
Procédé pour la construction d'une unité venturi pour un laveur venturi; unité venturi et laveur venturi

(30) Priorität: 05.05.1993 DE 4314788
(43) Veröffentlichungstag der Anmeldung: 14.12.1994
(73) Patentinhaber: Lockwood Greene Petersen GmbH, 65036 Wiesbaden (DE)
(72) Erfinder: Lehmann, Klaus, D-65527 Niedernhausen (DE)
(74) Vertreter: Carstens, Wilhelm, Dipl.-Phys.

(56) Entgegenhaltungen:
- EP-A- 0 433 617
- DE-B- 1 471 634
- DE-C- 682 149

## Beschreibung

Die Erfindung betrifft zunächst ein Verfahren zur Herstellung einer Venturibaueinheit mit einer Vielzahl von parallel angeordneten Venturis aus einem Werkstoff für einen Venturiwäscher zur Reinigung eines Gases mit einer Flüssigkeit.

Aus der DE 39 41 990 C1 ist ein gattungsgemäßes Verfahren bekannt, bei dem in zwei Werkstoffplatten jeweils eine Reihe von auf Abstand angeordneten Halbventuris durch Pressen eingeformt werden. Die Halbschalen werden sodann unter Anlage der nicht verformten Bereiche zwischen den Halbventuris zu einer Venturireihe durch Kleben oder Schweißen aneinandergefügt. Zur Herstellung einer Venturibaueinheit mit einer Vielzahl von nebeneinander angeordneten Venturireihen werden mehrere Venturireihen unter Anlage von Verbindungsstegen an das Außenprofil der Venturireihen zusammengefügt. Zur Reinigung eines mit Schadstoffen beladenen Rohgases wird das Rohgas dem mit der Venturibaueinheit bestückten Venturiwäscher zugeführt und durchströmt die Einlauftrichter und anschließend die Kehlenbereiche der parallel geschalteten Venturis. In den Kehlenbereichen wird über seitliche Einlässe Waschflüssigkeit eingeleitet, die sich mit dem zu reinigenden Rohgas intensiv vermischt und die Verunreinigungen bindet. Nach Durchströmung der Venturibaueinheit wird das entstandene Mehrphasengemisch einer dem Venturiwäscher nachgeschalteten Trenneinrichtung zugeführt, in der die Verunreinigungen mit der Waschflüssigkeit abgeschieden werden.

Als Nachteil an dem gattungsgemäßen Herstellungsverfahren ist der durch das Zusammenfügen einer Vielzahl einzelner Werkstücke zu einer Venturibaueinheit bedingte vergleichsweise höhere Herstellungsaufwand zu sehen.

Durch die geringe Wanddicke der Einzelventuris und der nur geringen Versteifung der Venturibaueinheit durch die nicht verformten Bereiche der Werkstoffplatten zwischen den einzelnen Venturis und die Verbindungsstege zwischen den Venturireihen ist nur eine begrenzte Stabilität der Venturibaueinheit gegeben. Insbsondere beim Druck- bzw. Druckwechselbetrieb des Venturiwäschers besteht die Gefahr der Zerstörung der Venturibaueinheit.

Aus der DE-B-14 71 634 ist eine Vorrichtung zur Abscheidung von in Gasen fein verteilten Verunreinigungen bekannt, die aus einer Mischzone für Gas- und Waschflüssigkeit aus den Durchflussquerschnitt ausfüllenden Venturirohren mit gegen deren konvergente Wandungsteile sprühenden Düsen, sowie einer Abscheidungszone zur Trennung von Gas und Flüssigkeit bzw. Schlamm besteht. Zwischen den Venturirohren und der Abscheidungszone sind Regelelemente zur Veränderung des Durchflussquerschnittes angeordnet. Dabei ist jedem Venturirohr eine Düse zugeordnet. Die Flüssigkeit verläßt die Düse in Form von Tropfenschleiern, welche gegen die Eintrittswandungen des zugeordneten Venturirohrs gespritzt werden und bei gleichzeitiger Reflektion gegen die Venturiachse neuerdings einen in sich geschlossenen Tropfenschleier bilden.

Aufgabe der Erfindung ist es, ein gattungsgemäßes Verfahren zur Herstellung einer Venturibaueinheit mit einer Vielzahl von parallel angeordneten Venturis der genannten Art anzugeben, bei dem der Fertigungsaufwand weiter verringert ist.

Die Aufgabe wird verfahrensgemäß dadurch gelöst, daß aus einem einzigen Werkstoff eine blockartige Venturibaueinheit unter Ausbildung der Venturibegrenzung und gleichzeitiger Ausfüllung der Zwischenräume zwischen den Venturis mit dem Werkstoff gefertigt wird.

Durch den einstückigen Aufbau bzw. Blockaufbau der Venturibaueinheit ist der Fertigungsaufwand weiter verringert, da gegenüber dem gattungsgemäßen Herstellungsverfahren beim erfindungsgemäßen Herstellungsverfahren das Fertigen und Zusammenfügen einer Vielzahl einzelner Werkstücke zu einer Venturibaueinheit entfällt.

Bevorzugt wird die blockartige Venturibaueinheit durch Urformen, vorzugsweise Spritzen oder Gießen, gefertigt. Das Herstellungsverfahren der Urform-, vorzugsweise Spritz- oder Gießtechnik, zur Fertigung von Venturibaueinheiten eignet sich insbesondere dann, wenn diese in größeren Stückzahlen aufgelegt werden.

Insbesondere für die Herstellung von kleineren Stückzahlen ist es von Vorteil, daß zunächst aus dem Wrkstoff ein blockartiges Werkstück hergestellt und danach die Venturis in dem Block durch Werkstoffabtrag, insbesondere spanende Formung, ausgeformt werden. Unter spanende Formung werden die in der DIN 8589 festgelegten Fertigungsverfahren verstanden.

Als Werkstoff für die Herstellung derartiger Ventuibaueinheiten für einen Venturiwäscher kann ein nichtmetallischer Werkstoff, insbesondere ein Kunststoff, oder ein metallischer Werkstoff eingesetzt werden.

Die Anströmfläche der Venturibaueinheit ist vorzugsweise kreisflächenförmig ausgebildet und die Venturibaueinheit wird dann in weiter bevorzugter Weise zylinderartig ausgebildet. Eine quaderartige Ausbildung ist ebenfalls möglich.

Die Erfindung ist auch auf eine Venturibaueinheit mit einer Vielzahl von parallel angeordneten Venturis für einen Venturiwäscher zur Reinigung eines Gases mit einer Flüssigkeit gerichtet.

Erfindunggemäß ist zur Lösung der Aufgabe vorgesehen, daß die Venturibaueinheit blockartig aus einem einzigen Werkstoff unter Ausbildung der Venturis und unter gleichzeitiger Ausfüllung der Zwischenräume zwischen den Venturis mit Werkstoff ausgebildet ist.

Neben dem weiter verringerten Fertigungsaufwand für eine solche Venturibaueinheit wird durch den Blockaufbau bzw. der Werkstoffausfüllung zwischen den einzelnen Venturis eine verglichen mit der gattungsgemäßen Venturibaueinheit höhere Stabilität erreicht. Darüber hinaus ist die erfindungsgemäße Venturibaueinheit im erhöhten Druck- und/oder Druckwechselbetrieb einsetzbar, da insbesondere die Kehlbereiche der außen liegenden einzelnen Venturis jeweils auch die benachbarten Venturis begrenzen, so daß das Blockmaterial im wesentichen nicht druckbeansprucht wird.

Sind die Venturis in dichter Zylinderpackung angeordnet, wird bei vorgebenen Betriebsbedingungen ein maximaler Volumenstrom des zu reinigenden Gases, bezogen auf eine vorgebene Querschnittsfläche der Venturibaueinheit, erreicht. Alternativ zu dieser bevorzugten Ausgestaltung der erfindungsgemäßen Venturibaueinheit ist vorgesehen, daß die Venturis auf konzentrischen Kreisbahnen angeordnet sind oder daß die Venturis gleichständig in Reihen angeordnet sind.

Eine weitere vorteilhafte Ausgestaltung der Venturibaueinheit ist, daß sie zylinderartig ausgebildet ist. Die somit vorliegende kreisförmige Anströmfläche der Venturibaueinheit entspricht der Querschnittsform eines Sprühkegels einer bevorzugt einzusetzenden Vollkegeldüse für die Beaufschlagung der Venturibaueinheit mit Waschflüssigkeit. Grundsätzlich kann die Anströmfläche auch eine von der Kreisform abweichende Form aufweisen, z. B. quadratisch, rechteckig, polygonalartig, und somit kann die Venturibaueinheit im weitesten Sine quaderartig ausgebildet sein. Die Sprühform der einzusetzenden Düse kann dann entsprechend gestaltet werden.

Es ist weiterhin von Vorteil, daß die Venturibaueinheit einen Befestigungsflansch aufweist.

Letztendlich richtet sich die Erfindung auf einen Venturiwäscher mit einem Waschbehälter, mindestens einer in dem Waschbehälter angeordneten Venturibaueinheit nach mindestens einem der Ansprüche 6 - 11 und einer Bedüsungseinrichtung zur Zuführung von Waschflüssigkeit auf die Anströmseite der Venturibaueinheit.

Erfindungsgemäß ist vorgesehen, daß sich quer durch den Waschbehälter eine Tragplatte mit einer Vielzahl von Durchlaßöffnungen erstreckt, in denen jeweils eine Venturibaueinheit angeordnet ist, und daß beabstandet von der Tragplatte für jede Venturibaueinheit eine einzige auf die Anströmseite der Venturibaueinheit ausgerichtete Düse für die Waschflüssigkeit angeordnet ist.

Eine vorteilhafte Ausgestaltung des erfindungsgemäßen Venturiwäschers ist darin zu sehen, daß bei einem Venturiwäscher mit einer Vielzahl von parallel angeordneten Venturibaueinheiten die Venturibaueinheiten in im wesentlichen gleichmäßiger Verteilung auf der Tragplatte angeordnet sind.

Das erfindungsgemäße Verfahren, eine nach diesem Verfahren hergestellte Venturibaueinheit und ein mit mehreren dieser Venturibaueinheiten bestückter Venturiwäscher sollen anhand der beigefügten Figuren näher beschrieben werden.

Es zeigen:
- Fig. 1: ein Venturiwäscher mit mehreren parallel angeordneten Venturibaueinheiten
- Fig. 2: eine Einzelheit X aus dem Venturiwäscher nach Fig. 1 mit zwei auf einer Tragplatte parallel angeordneten Venturibaueinheiten mit jeweils einer auf die Unterseite der Venturieeinheit ausgerichteten Düse im Längsschnitt und
- Fig. 3: eine isometrische Darstellung einer Venturibaueinheit.

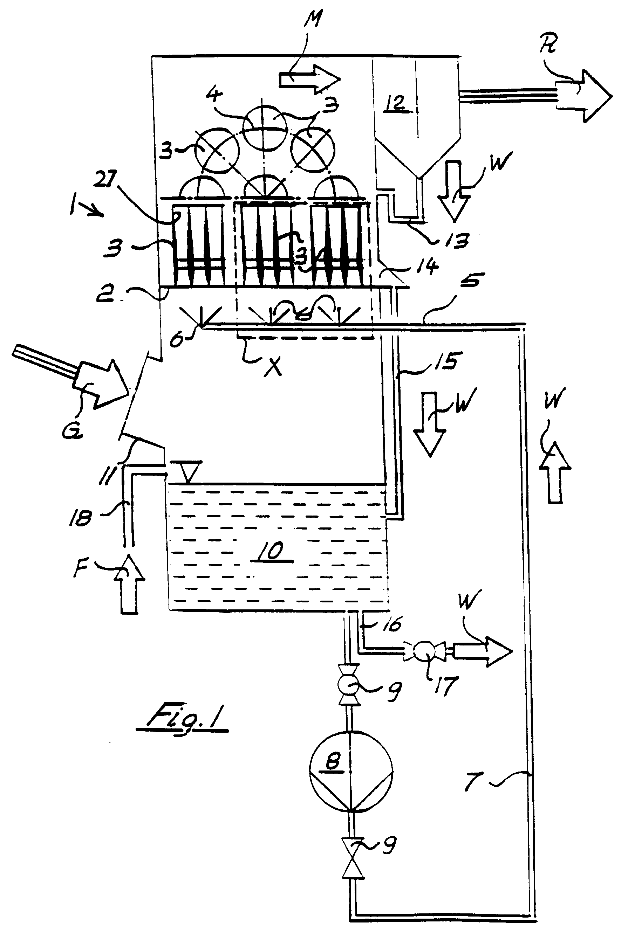

Die Fig. 1 zeigt einen Venturiwäscher mit einem Waschbehälter 1 mit einer Vielzahl parallel geschalteter auf einer sich quer durch den Waschbehälter 1 erstreckenden Tragplatte 2 angeordneter Venturibaueinheiten 3.

Die Venturibaueinheiten sind in im wesentlichen gleichmäßiger Verteilung auf einem zu einer zentralen Venturibaueinheit 3 konzentrischen Kreis 4 auf der Tragplatte 2 angeordnet. Es ist aber auch vorgesehen, die Venturibaueinheiten 3 auf mehreren konzentrisch zueinander verlaufenden Kreisen 4 anzuordnen oder die Venturibaueinheiten 3 in nebeneinander verlaufenden Reihen anzuordnen, wobei die Venturibaueinheiten 3 gleichständig oder derart angeordnet sind, daß die Venturibaueinheiten 3 der einen Reihe in die Lücken zwischen den Venturibaueinheiten 3 der anderen Reihe einragen.

Unterhalb der Tragplatte 2 ist ein Düsenstock 5 mit Waschdüsen 6 so angeordnet, daß jede Venturibaueinheit 3 von einer Waschdüse 6 beaufschlagbar ist.

Der Düsenstock 6 ist über eine Leitung 7 mit eingeschlossener Umwälzpumpe 8 und Absperrorganen 9 mit einem Wäschersumpf 10 am Grund des Waschbehälters 1 verbunden.

Ein von Verunreinigungen zu reinigendes Rohgas G wird durch einen am Waschbehälter 1 zwischen dem Wäschersumpf 10 und dem Düsenstock 5 angeordneten Stutzen 11 dem Venturiwäscher aufgegeben und durchströmt unter intensiver Vermischung mit über die Waschdüsen 6 zugeführtem Waschwasser W die parallel geschalteten Venturibaueinheiten 3, wobei die Verunreinigungen vom Waschwasser W gebunden werden.

Der Gasstrom wird einer dem Venturiwäscher nachgeschalteten Trenneinrichtung 12, wie z.B. einem Prallabscheider zugeführt, in dem die Reste des Waschwassers W mit gebundenen Verunreinigungen abgeschieden werden.

Aus der Trenneinrichtung 12 wird Reingas R abgeführt. Das in der Trenneinrichtung abgeschiedene mit den Verunreinigungen beladene Waschwasser wird über eine Leitung 13 in das Wäschergehäuse 1 oberhalb der Tragplatte 2 zurückgeführt, in einer Sammelrinne 14 gesammelt und über eine mit dem Wäschersumpf 10 verbundene Leitung 15 zurückgeführt.

Zur Aufrechterhaltung einer vorgegebenen Waschwasserqualität wird aus dem Wäschersumpf 10 über eine Leitung 16 mit einem Absperrorgan 17 Waschwasser W abgeführt und über eine an dem Waschbehälter angeschlossene Leitung 18 durch Frischwasser F ersetzt.

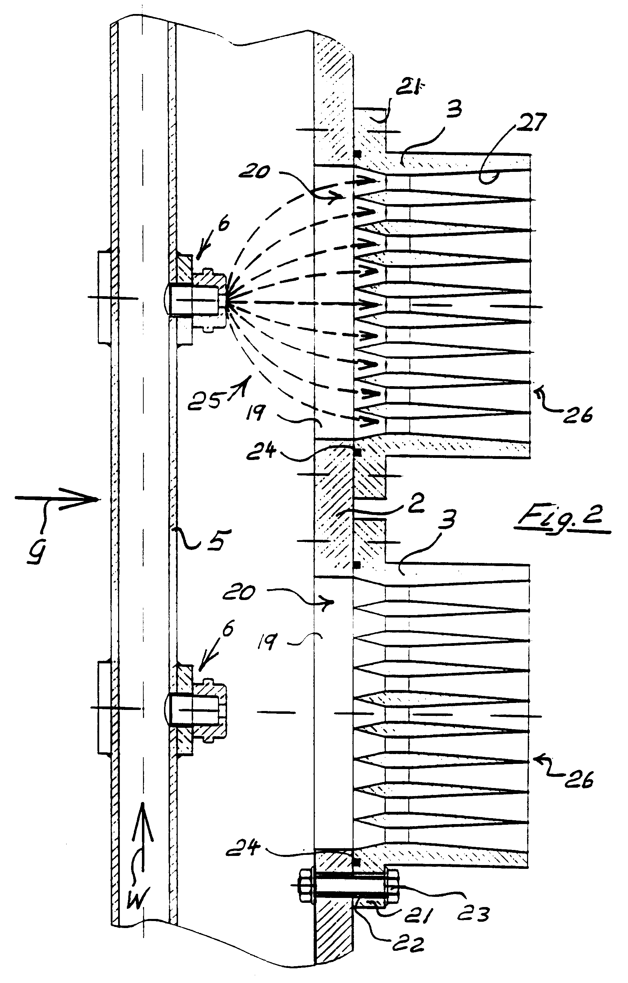

Die in Fig. 2 dargestellte Einzelheit X, die in Fig. 1 gestrichelt gerahmt ist, zeigt im Detail die Tragplatte 2 mit zwei Durchlaßöffnungen 19 und mit zwei jeweils eine der Durchlaßöffnungen 19 abdeckenden und auf der Tragplatte 2 befestigten Venturibaueinheiten 3.

Die Befestigungen der Venturibaueinheiten 3 an der Tragplatte 2 erfolgen jeweils über einen bündig mit der Anströmseite 20 der Venturibaueinheit 3 abschließenden und an dessen Außenseite angeordneten Verbindungsflansch 21 mit Durchgangslöcher 22 zur Aufnahme einer Schraubverbindung 23 und jeweils einem zwischen der Venturbaueinheit 3 und der Tragplatte 2 angeordneten Dichtelement 24.

Es ist aber auch vorgesehen, daß die Venturibaueinheit 3 durch die Durchlaßöffnungen 20 durchragend oder mit deren Abströmseite 26 an der anderen Seite der Tragplatte angrenzend befestigt ist. Dementsprechend ist der Flansch 21 von der Abströmseite 20 beabstandet bzw. bündig mit der Abströmseite 26 angeordnet. Alternativ ist vorgesehen, die Venturibaueinheit 3 mittels Zuganker an der Tragplatte 2 zu befestigen.

Die Waschdüsen 6 sind derart auf die Anströmseite 20 der Venturibaueinheit 3 ausgerichtet angeordnet, daß ihr vollkegelförmiger Waschwasserstrahl 25 genau die Anströmseite 20 abdeckt.

Wie beim Stand der Technik kann die Waschflüssigkeit W auch auf andere Weise zugeführt werden.

Neben dem in Fig. 1 dargestellten Aufwärtsstrombetrieb ist es auch möglich, die blockartige Venturibaueinheit in Venturiwäschern einzusetzen, die im Abwärts- oder Horizontalstrombetrieb arbeiten.

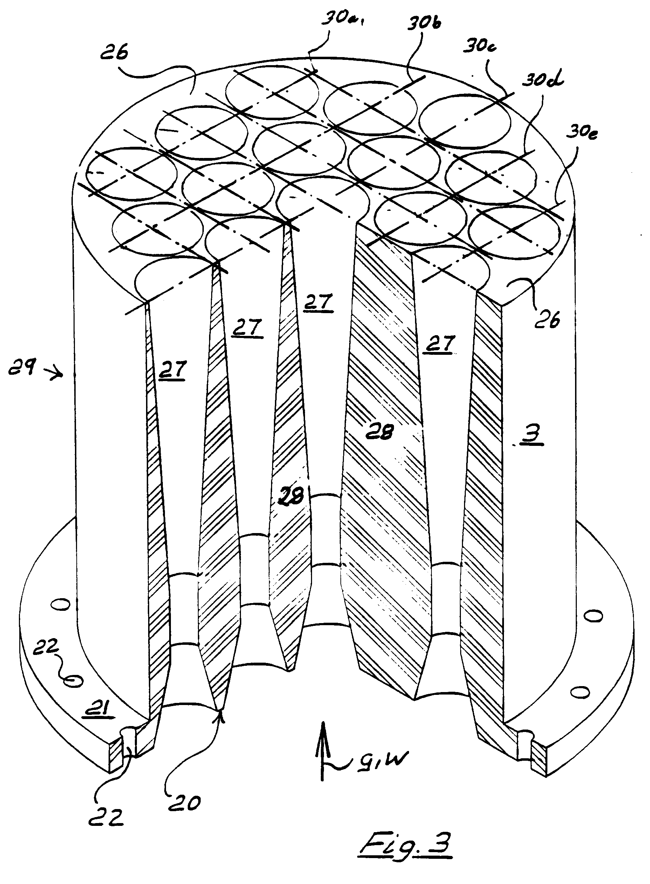

Fig. 3 zeigt eine zylinderförmige aus Kunststoff oder Stahl gefertigte blockartige Venturibaueinheit 3 mit einer Vielzahl von parallel angeordneten Venturis 27 mit kreisförmigem Querschnitt und mit angegossenem Verbindungsflansch 21.

Die Blockartigkeit der Venturibaueinheit 3 ist dadruch gegeben, daß die Zwischenräume 28 mit Werkstoff ausgegossen sind.

Es ist weiterhin vorgesehen, die Venturibaueinheit 3 zu einem Block mit einer beliebigen polygonalen Querschnittsform aufzubauen, wobei neben einem metallischen Werkstoff auch Kunststoff eingesetzt wird. Ebenso ist vorgesehen, die einzelnen Venturis 27 in beliebiger runder, eckiger und polygonaler Querschnittsform auszuführen, wobei jedoch die kreisförmige Querschnittsform für den einzelnen Venturi bevorzugt wird.

Neben dem Herstellungsverfahren durch Urformen ist auch daran gedacht, daß aus dem Werkstoff zunächst ein blockartiges Werkstück 29 hergestellt wird und danach die Venturis 27 in dem Block 29 durch Werkstoffabtrag, insbesondere spanende Formung, wie vorzugsweise Bohren und/oder Fräsen ausgeformt werden.

Die Venturis 27 sind in einzelne Venturireihen 30a, 30b, 30c, 30d, 30e derart nebeneinander angeordnet, daß die Venturis 27 der einen Venturireihe in die Lücken zwischen den Venturis 27 der anderen Venturireihe einragen. Es ist aber auch vorgesehen, daß die Venturis 27 auf konzentrischen Kreisbahnen angeordnet sind oder die Venturis gleichständig in Reihen angeordnet sind.

## Patentansprüche

1. Verfahren zur Herstellung einer Venturibaueinheit mit einer Vielzahl von parallel angeordneten Venturis aus einem Werkstoff für einen Venturiwäscher zur Reinigung eines Gases mit einer Flüssigkeit, dadurch gekennzeichnet, daß aus einem einzigen Werkstoff eine blockartige Venturibaueinheit unter Ausbildung der Venturibegrenzung und unter gleichzeitiger Ausfüllung der Zwischenräume zwischen den Venturis mit dem Werkstoff gefertigt wird.

2. Verfahren nach Anspruch 1,
**dadurch gekennzeichnet**, daß die blockartige Venturibaueinheit durch Urformen, Spritzen oder Gießen gefertigt wird.

3. Verfahren nach Anspruch 1,
**dadurch gekennzeichnet**, daß zunächst aus dem Werkstoff ein blockartiges Werkstück hergestellt und danach die Venturis in dem Block durch Werkstoffabtrag, insbesondere spanende Formung, ausgeformt werden.

4. Verfahren nach mindestens einem der Ansprüche 1 - 3
**dadurch gekennzeichnet**, daß als Werkstoff ein nichtmetallischer Werkstoff, insbesondere ein Kunststoff, oder ein metallischer Werkstoff eingesetzt wird.

5. Verfahren nach mindestens einem der Ansprüche 1 - 4,
**dadurch gekennzeichnet**, daß die Venturibaueinheit zylinderartig oder quaderartig ausgebildet wird.

6. Venturibaueinheit mit einer Vielzahl von parallel angeordneten Venturis für einen Venturiwäscher zur Reinigung eines Gases mit einer Flüssigkeit **dadurch gekennzeichnet**, daß die Venturibaueinheit (3) blockartig aus einem einzigen Werkstoff unter Ausbildung der Venturis und unter gleichzeitiger Ausfüllung der Zwischenräume (28) zwischen den Venturis (27) ausgebildet ist.

7. Venturibaueinheit nach Anspruch 6,
**dadurch gekennzeichnet**, daß die Venturis (27) in dichter Zylinderpackung angeordnet sind.

8. Venturibaueinheit nach Anspruch 6,
dadurch gekennzeichnet, daß die Venturis (27) auf konzentrischen Kreisen angeordnet sind.

9. Venturibaueinheit nach Anspruch 6,
**dadurch gekennzeichnet**, daß die Venturis (27) gleichständig in Reihen (30a, 30b, 30c, 30d, 30e) angeordnet sind.

10. Venturibaueinheit nach mindestens einem der Ansprüche 6 - 9,
**dadurch gekennzeichnet**, daß sie zylinderartig oder quaderartig ausgebildet sind.

11. Venturibaueinheit nach mindestens einem der Ansprüche 6 - 10,
**dadurch gekennzeichnet**, daß sie einen Befestigungsflansch (21) aufweist.

12. Venturiwäscher mit einem Waschbehälter, mindestens einer in dem Waschbehälter angeordneten Venturibaueinheit nach mindestens einem der Ansprüche 6 - 11 und einer Bedüsungseinrichtung zur Zuführung von Waschflüssigkeit auf die Anströmseite der Venturibaueinheit,
**dadurch gekennzeichnet**, daß sich quer durch den Waschbehälter (1) eine Tragplatte (2) mit einer Vielzahl von Durchlaßöffnungen (19) erstreckt, in denen jeweils eine Venturibaueinheit (3) angeordnet ist,
und daß beabstandet von der Tragplatte für jede Venturibaueinheit (3) eine einzige auf die Anströmseite (20) der Venturibaueinheit (3) ausgerichtete Düse (6) für die Waschflüssigkeit (W) angeordnet ist.

13. Venturiwäscher nach Anspruch 12,
**dadurch gekennzeichnet**, daß bei einem Venturiwäscher mit einer Vielzahl von parallel angeordneten Venturibaueinheiten (3) die Venturibaueinheiten (3) in im wesentlichen gleichmäßiger Verteilung über die Tragsplatte (2) angeordnet sind.

## Claims

1. Method for the manufacture of a venturi constructional unit with a plurality of venturis arranged in parallel and made of a material for a venturi washer for cleaning of a gas with a liquid,
characterized in that from a single material a block-like venturi constructional unit is manufactured while forming the venturi delimitation and while simultaneously filling up the interstices between venturis with material.

2. The method according to claim 1,
characterized in that the block-like venturi constructional unit is manufactured by primary shaping, moulding or casting.

3. The method according to claim 1,
characterized in that first a block-like work piece is made of the material and thereafter the venturis are formed in the block by material removal, especially by cutting forming.

4. The method according to at least one of the claims 1-3,
characterized in that as a material a non metallic material, especially plastic, or a metallic material is used.

5. The method according to at least one of the claims 1-4,
characterized in that the venturi constructional unit is formed in a cylindrical manner or a parallelepipedal manner.

6. Venturi constructional unit with a plurality of venturis arranged in parallel for a venturi washer for cleaning a gas with a liquid,
characterized in that venturi constructional unit (3) is formed in a block-like manner from a single material while forming the venturis and while simultaneously filling up the interstices (28) between the venturis (27).

7. Venturi constructional unit according to claim 6,
characterized in that the venturis (27) are arranged in closest cylinder packing.

8. Venturi constructional unit according to claim 6,
characterized in that the venturis (27) are arranged on concentrical circles.

9. Venturi constructional unit according to claim 8,
characterized in that the venturis (27) are arranged in rows (30a, 30b, 30c, 30d, 30e) in a regular manner.

10. Venturi constructional unit according to at least one of the claims 6-9, characterized in that they are formed in a cylindrical or parallelepipedal manner.

11. Venturi constructional unit according to at least one of the claims 6-9, characterized in that the unit is provided with a connection flange (21).

12. Venturi washer with a washing container, at least one venturi constructional unit according to at least one of the claims 6-11 arranged in the washing container and a spray unit for the supply of washing liquid on the blow side of the venturi constructional unit
characterized in that transversally through the washing container (1) a carrier plate (2) having a plurality of passage openings (19) extends, in each of the passage openings a venturi construcional unit is arranged and in that spaced from the carrier plate (2) for each venturi constructional unit (3) a single nozzle (6) for the washing liquid (W) is arranged, which is directed to the onflow side (20) of the venturi constructional unit (3).

13. Venturi washer according to claim 12,
characterized in that in case of a venturi washer with a plurality of venturi constructional units arranged in parallel the venturi constructional units (3) are arranged substantially in equal distribution over the carrier plate (2).

## Revendications

1. Procédé pour la fabrication d'une unité de construction à venturis comprenant une pluralité de venturis agencés en parallèle et réalisés en une matière pour un dispositif de lavage à venturi pour le nettoyage d'un gaz au moyen d'un liquide, caractérisé en ce qu'on réalise à partir d'un seul matériau de construction une unité de construction à venturis sous forme d'un bloc en réalisant des délimitations des venturis et en remplissant simultanément les interstices entre les venturis avec le matériau de construction.

2. Procédé selon la revendication 1, caractérisé en ce que l'unité de construction à venturis est réalisée par moulage, par injection ou par coulage.

3. Procédé selon la revendication 1, caractérisé en ce qu'on réalise d'abord à partir du matériau de construction une ébauche en forme de bloc, et en ce qu'on réalise ensuite les venturis dans le bloc par enlèvement de matière, notamment un usinage par enlèvement de copeaux.

4. Procédé selon l'une quelconque des revendications 1 à 3, caractérisé en ce qu'on utilise comme matériau de construction, un matériau de construction non métallique, notamment une matière plastique, ou un matériau de construction métallique.

5. Procédé de selon au moins une des revendications 1 à 4, caractérisé en ce que l'unité de construction à venturis est réalisée sous forme cylindrique ou parallépipédique.

6. Unité de construction à venturis comprenant une pluralité de venturis disposés en parallèle pour un dispositif de lavage à venturis pour le nettoyage d'un gaz au moyen d'un liquide, caractérisée en ce que l'unité de construction à venturis (3) est réalisée sous forme d'un bloc en un seul matériau de construction en réalisant des délimitations des venturis et en remplissant simultanément les interstices (28) entre les venturis (27).

7. Unité de construction à venturis selon la revendication 6, caractérisée en ce que les venturis (27) sont agencés selon une configuration dense de tassement en forme de cylindre.

8. Unité de construction à venturis selon la revendication 6, caractérisée en ce que les venturis (27) sont agencés sur des cercles concentriques.

9. Unité de construction à venturis selon la revendication 6, caractérisée en ce que les venturis (27) sont disposés en rangées (30a, 30b, 30c, 30d, 30e) régulières.

10. Unité de construction à venturis selon au moins une des revendications 6 à 9, caractérisée en ce qu'elles sont réalisées sous forme cylindrique ou parallélépipédique.

11. Unité de construction à venturis selon au moins une des revendications 6 à 10, caractérisée en ce qu'elle présente un flasque de fixation (21).

12. Dispositif de lavage à venturis comprenant un récipient de lavage, au moins une unité de construction à venturis selon au moins une des revendications 6 à 11 disposée dans le récipient de lavage, et un dispositif à buses pour amener le liquide de lavage sur le côté de soufflage de l'unité de construction à venturis, caractérisé en ce qu'une plaque de support (2) comportant une pluralité d'ouvertures de passage (19) s'étend transversalement à travers le récipient de lavage (1), ouvertures de passage dans lesquelles est respectivement agencée une unité de construction à venturis (3), et en ce que pour chaque unité de construction à venturis (3) une seule buse (6) pour le liquide de lavage (W) dirigée sur le côté de soufflage (20) de l'unité (3) de construction à venturis est disposée à distance de la plaque de support.

13. Dispositif de lavage à venturis selon la revendication 12, caractérisé en ce que dans le cas d'un dispositif de lavage à venturis comprenant une pluralité d'unités (3) de construction à venturis disposées en parallèle, les unités de construction à venturis (3) sont agencées essentiellement de façon régulière sur la plaque de support (2).
